# FASCICULE DE BREVET EUROPEEN

(11) **EP 2 094 808 B1**
(45) Date de publication et mention de la délivrance du brevet: **20.10.2010**
(21) Numéro de dépôt: 07822685.9
(22) Date de dépôt: 16.11.2007
(51) Int. Cl.: C09K 3/14, C09K 3/18

(54) **COMPOSITION DENEIGEANTE ANTIDERAPANTE**
RUTSCHFESTSCHNEEENTFERNENDE ZUSAMMENSETZUNG
ANTISKID SNOW-CLEARING COMPOSITION

(30) Priorité: 17.11.2006 FR 0610066
(43) Date de publication de la demande: 02.09.2009
(73) Titulaire: SEITA, Victor, 77163 Dammartin Sur Tigeaux (FR); SICOT, Roger, 1815 Clarens (CH); DENOLLE, Yann, 92200 Neuilly Sur Seine (FR)
(72) Inventeur: SEITA, Victor, 77163 Dammartin Sur Tigeaux (FR); SICOT, Roger, 1815 Clarens (CH); DENOLLE, Yann, 92200 Neuilly Sur Seine (FR)
(74) Mandataire: Ahner, Francis
(86) Numéro de dépôt international: PCT/EP2007/062469
(87) Numéro de publication internationale: WO 2008/059057

(56) Documents cités:
- DE-A1- 3 141 644
- US-A- 5 296 167
- DATABASE WPI Week 198549 Derwent Publications Ltd., London, GB; AN 1985-305771 XP002436867 & JP 60 195178 A (MASUYAMA Y) 3 octobre 1985 (1985-10-03)
- DATABASE WPI Week 198547 Derwent Publications Ltd., London, GB; AN 1985-293410 XP002436868 & JP 60 202182 A (MATSUSHITA ELECTRIC WORKS LTD) 12 octobre 1985 (1985-10-12)

## Description

La présente invention concerne des compositions pulvérulentes, déneigeantes et déverglaçantes aux propriétés antidérapantes. On entend désigner par cette expression des compositions capables de faire fondre la glace, la neige ou plus généralement l'eau sous forme solide recouvrant diverses surfaces, comme par exemple les routes, les ponts, les places et les trottoirs, tout en laissant subsister un agent antidérapant sur cette surface.

On entend désigner par pulvérulent une poudre sèche de diamètre moyen compris entre 0,6 et 8 mm, pouvant être répandue par tout moyen d'épandage.

Le déneigeant le plus utilisé aujourd'hui est le chlorure de sodium, en raison principalement de son faible coût. Le chlorure de sodium permet d'abaisser le point de fusion de l'eau dans laquelle il est dissous jusqu'à -21°C dans des conditions de laboratoire bien contrôlées. Mais sur les routes, NaCl ne fait pas fondre la glace à des températures inférieures à -9°C. De plus, les quantités de sel qui doivent être épandues pour obtenir ce résultat sont très importantes et s'accompagnent d'inconvénients majeurs.

Le principal problème réside dans la dispersion dans l'environnement de grandes quantités d'ions chlorures. Ils sont tenus pour responsables de l'inhibition de l'absorption d'eau par les racines des arbres et des plantes. Aussi les chlorures s'infiltrent dans les feuilles, qui brunissent des bords vers l'intérieur et tombent prématurément. Sous l'action de la pluie et de la neige fondue, les chlorures présents dans les feuilles tombées sont lavés et redissous, puis le cycle recommence. Ainsi, on assiste à une accumulation de chlorures dans les sols.

Quant aux ions sodium, leur accumulation tend à obstruer la terre et à favoriser la compaction les sols en couches.

Un autre aspect défavorable lié à l'utilisation de chlorure de sodium, réside dans son pouvoir corrosif sur les surfaces métalliques, principalement sur les alliages de fer ou d'aluminium. Il favorise les réactions d'oxydo-réduction responsables de la dégradation des métaux en facilitant les échanges d'électrons.

De nombreuses compositions chimiques ont été étudiées afin de remplacer le chlorure de sodium, mais aucune n'a pleinement donné satisfaction, soit en raison d'un coût élevé, d'un impact négatif sur l'environnement, ou bien parce qu'elles détériorent les surfaces traitées.

Les sels d'ammonium, qui fonctionnent comme dégivrant, attaquent le béton, le mortier et les matériaux contenant du calcium. Les sulfates tendent à réagir avec le tricalcium aluminate du ciment et produisent des craquements et des fissures.

Les antigels organiques sont moins agressifs pour les surfaces mais ils sont beaucoup plus chers que les agents inorganiques et constituent rarement une solution économiquement viable. A cela s'ajoutant des problèmes de pollution, car ceux-ci sont aussi plus difficilement biodégradables. Les glycols, par exemple, qui se présentent sous forme liquide, sont résistants à la dégradation et contaminent durablement les bassins d'eau.

La publication de demande de brevet DE 31 41 644 A1 décrit une composition déneigeante comprenant en poids de 50 à 90% de carbonate de calcium et de 10 à 50% de chlorure de calcium ainsi que le procédé d'élaboration de cette composition.

Le besoin existe donc toujours aujourd'hui d'un agent anti-gel ou anti-neige efficace dans des conditions extrêmes, et qui permette de réduire les quantités de sels répandues dans l'environnement.

Ainsi la présente invention fournit une composition essentiellement inorganique, simple et économiquement acceptable, dont le pouvoir dégivrant est bien plus élevé que celui du chlorure de sodium, permettant ainsi son utilisation en quantités suffisamment faibles pour limiter significativement son impact sur l'environnement.

Cette composition comprend un mélange de sels de calcium comprenant en poids 70 à 90% de chlorure de calcium et 10 à 30% de carbonate de calcium.

Plus précisément, la présente invention concerne une composition pulvérulente déneigeante, déverglaçante et antidérapante, **caractérisée en ce qu**'elle comprend un mélange de sels de calcium comprenant en poids 70 à 90% de chlorure de calcium et 10 à 30% de carbonate de calcium et que te chlorure de calcium est sous forme de paillettes et sous forme de perles, dans un rapport entre la quantité en poids de chlorure de calcium sous forme de perles et la quantité en poids de chlorure de calcium sous forme de paillettes est compris entre 0,5 et 1,5.

Une telle composition permet d'atteindre des températures de protection proches de -50°C, c'est-à-dire que lorsqu'elle est présente à la surface d'une route soumise à un refroidissement, elle permet de retarder l'apparition des premiers cristaux de glace jusqu'à environ -50°C.

Cet effet surprenant a pour origine le choix du chlorure de calcium et son utilisation de façon combinée sous deux formes différentes.

Le chlorure de calcium présente un double davantage par rapport au chlorure de sodium. D'une part, son impact sur l'abaissement du point de fusion de l'eau est bien plus élevé. En effet, l'abaissement du point de fusion par la dissolution de sels est une propriété dite colligative, c'est-à-dire qu'elle dépend du nombre de particules de soluté présentes. Ainsi, le chlorure de calcium, qui se dissocie en trois ions (un calcium et deux chlorures) abaisse plus le point de fusion de l'eau que ne le fait le chlorure de sodium qui ne donne que deux ions.

De plus, alors que la dissolution du chlorure de sodium est un phénomène endothermique, allant à l'encontre du but recherché, la dissolution du chlorure de calcium est fortement exothermique, contribuant ainsi à la fonte de la neige ou de la glace.

Le chlorure de calcium est présent dans la composition selon l'invention sous la forme de paillettes et sous la forme de perles.

Les perles sont de petites sphères qui ont une très forte teneur en chlorure de calcium, avantageusement supérieure à 90% en poids, plus avantageusement encore comprise entre 94 et 97% en poids.

Les paillettes contiennent environ 77% en masse de chlorure de calcium ainsi que des résidus de fabrication comme des sels alcalins, de magnésium, de la chaux et de l'eau résiduelle.

Les perles ont une chaleur de dissolution plus importante que les paillettes (679 kJ/mole contre 302 kJ/mole) et sont donc plus efficaces. Toutefois, une raison s'oppose à l'utilisation unique de perles dans la composition de l'invention : l'épandage de particules solides sphériques sur des surfaces déjà glissantes aurait un effet contraire à celui recherché, et ne contribuerait pas à sécuriser lesdites surfaces.

C'est pourquoi les auteurs de la présente invention ont élaboré une composition optimale, dans laquelle les paillettes mélangées aux perles compensent de façon mélanique les effets de roulement que ces dernières pourraient occasionner.

Le rapport entre la quantité en poids de chlorure de calcium sous forme de perles et la quantité en poids de chlorure de calcium sous forme de paillettes est compris entre 0,5 et 1,5, et plus avantageusement encore supérieur à 1.

Avantageusement, le mélange de sels de calcium comprend en poids environ 80% de chlorure de calcium et environ 20% de carbonate de calcium.

Le carbonate de calcium joue le rôle d'antidérapant. Insoluble dans l'eau, il permet d'accroître l'adhérence aux surfaces traitées et de diminuer les risques de glissade, en constituant une couche de particules solides rugueuses qui subsistent une fois les chlorures dissous et la neige ou la glace fondues.

Il permet de plus d'éviter les problèmes liés à l'utilisation du sable, qui adhère aux chaussures des piétons et endommage ensuite les parquets et carrelages lorsque ceux-ci regagnent leurs habitations. Le carbonate de calcium est un solide plus mou que le sable et qui s'écrase sous le poids de la foulée. Il reste donc inoffensif pour les sols intérieurs, mais aussi pour les parvis et les surfaces extérieures fragiles comme les marbres.

Le carbonate de calcium est avantageusement présent dans la composition selon l'invention sous forme de grains d'au moins deux profils granulométriques différents, et en particulier appartenant à des gammes de tailles disjointes.

On entend par profil granulométrique, le décompte des particules en fonction de leur taille.

Avantageusement, 50% du carbonate de calcium a une taille moyenne de particule environ égale à 1,1 mm et 50% une taille moyenne de particule environ égale à 1,8 mm.

Ainsi, les grains dont la taille est la plus élevée sont particulièrement adaptés aux chaussées où circulent des véhicules à moteur, des cycles et cyclomoteurs ainsi que des piétons équipés de chaussures dont les semelles présentent de larges rainures.

Les grains de taille plus faible participent à sécuriser le passage de piétons portant des chaussures de ville comme les chaussures à talon.

La composition selon l'invention peut en outre comprendre un indicateur d'épandage coloré.

Cet indicateur permet de repérer directement à l'oeil les zones déjà traitées et d'éviter ainsi l'utilisation d'excès de sels.

L'indicateur d'épandage coloré est avantageusement fixé par adsorption sur une fraction au moins du chlorure de calcium. Ainsi il est éliminé par rinçage de l'eau résultant de la fonte de la neige ou de la glace.

Avantageusement, la quantité d'indicateur d'épandage représente en poids moins de 0,1% du poids total, et de préférence 0,01%.

L'indicateur d'épandage est avantageusement un colorant alimentaire pouvant être choisi dans le groupe des colorants Exxx, et est de préférence E 102, E 104, E 110, E131.

La composition selon l'invention peut également comprendre d'autres additifs comme par exemple un agent anti-figeant.

On entend par agent anti-figeant tout agent dont la fonction est d'empêcher la reprise en masse, sous forme solide, de l'eau fondue sous l'action de la composition selon l'invention.

L'agent anti-figeant peut être choisi parmi les composés et les sels organiques et minéraux, et est avantageusement le chlorure de sodium ou l'urée.

Avantageusement, la quantité d'urée représente en poids de 2 à 10% du poids total, et de préférence 4%.

En raison de son coût plus élevé que celui de NaCl, la composition selon l'invention n'a pas vocation à remplacer ce dernier sur la plupart des routes et autoroutes pour lesquelles de grandes quantités de déneigeant doivent être épandues, mais elle trouvera plutôt des applications en milieu urbain ou sur des portions de route particulièrement dangereuses. On peut citer à titre d'exemple les sorties d'école, d'hôpital, d'église, de bâtiment public, les places, les trottoirs, les parvis, les zones piétonnes, les pistes cyclables, les accès aux maisons et immeubles d'habitation, les escaliers extérieurs, les ponts, les parkings, mais aussi les pistes d'aéroport. Parmi les secteurs typiques sur lesquels la circulation est délicate par temps froid et où l'invention trouvera aussi des applications, on peut citer à titre d'exemple les entrées et sorties d'autoroute, les échangeurs autoroutiers, les ronds-points, les routes en pente, les routes de montagne et les cols, les secteurs urbains et les zones limitées à 30 km/h.

L'invention a aussi pour objet l'utilisation d'une composition telle que décrite précédemment pour provoquer la fusion de neige, de glace, ou de toute autre forme d'eau solide.

L'invention a donc également pour objet l'utilisation d'une composition telle que décrite précédemment en tant que déneigeant ou déverglaçant.

L'invention a également pour objet un procédé de préparation d'une composition telle que décrite précédemment et comprenant un indicateur d'épandage coloré, caractérisé en ce qu'il comprend les étapes successives suivantes :
- introduire dans un mélangeur à pales, ou à vis, ou tout autre mélangeur équivalent, une fraction de la quantité totale de chlorure de calcium et l'indicateur d'épandage;
- mélanger lentement jusqu'à répartir uniformément l'indicateur d'épandage sur le chlorure de calcium sans casser les paillettes de chlorure de calcium ;
- ajouter la fraction restante de chlorure de calcium ainsi que le carbonate de calcium et éventuellement les autres ingrédients.
- mélanger jusqu'à obtenir un mélange solide uniforme.

De façon avantageuse, la première fraction de chlorure de calcium, avec laquelle sera mélangé l'indicateur, représente 1/8 de la fraction totale.

Il est particulièrement important de répartir l'indicateur coloré de façon uniforme sur le chlorure de calcium, afin qu'il donne à l'utilisateur final une indication fiable de la quantité de composition déneigeante présente à la surface.

L'invention est illustrée, de manière non limitative, par l'exemple suivant.

### Exemple :

La chaleur de dissolution dans l'eau d'une composition selon l'invention a été comparée à celle de simples paillettes de chlorure de calcium.

### Produits :

- Le produit de référence est constitué de CaCl₂ en paillettes Chlorure de Calcium 77/80% de la société Quaron.
- Le produit testé est une composition selon l'invention contenant en poids :
   - 34,99% de CaCl₂ en paillettes "Chlorure de Calcium 77/80%" de la société Quaron.
   - 45% de CaCl₂ en perles "Calcium Chloride Prills 94-97%" de la société Nedmag
   - 10% de CaCO₃ ∅ 1,1 mm "Granicalcium" de la société Omya
   - 10% de CaCO₃ ∅ 1,8 mm "Granicalcium" de la société Omya
   - 0,01% de colorant "Vert Menthe C" de la société Sensient LCW, adsorbé sur 1/8 du CaCl₂.

### Protocole expérimental :

30 g de ces deux déverglaçants ont été mélangés séparément dans 100 g d'eau à exactement 20°C. Les mélanges ont été placés sous agitation magnétique, à environ 300 tours/min, chacun dans un bécher isolé par une coque en polystyrène, afin de limiter les échanges thermiques. L'élévation de la température dans chacun des deux mélanges, due à la réaction exothermique de la dissolution du déverglaçant, a été suivie par des relevés de température espacés de 10 secondes et reportés en fonction du temps.

### Résultats :

Comparativement à un déverglaçant classique de référence, le test démontre que l'élévation de température due à la réaction exothermique de dissolution du chlorure de calcium est deux fois plus importante pour le déverglaçant selon l'invention. La composition selon l'invention permet donc d'accélérer significativement la fusion de la glace et de la neige par rapport à un déverglaçant classique.

## Revendications

1. Composition pulvérulente déneigeante, deverglaçante et antidérapante, **caractérisée en ce qu'**elle comprend un mélange de sels de calcium comprenant en poids 70 à 90% de chlorure de calcium et 10 à 30% de carbonate de calcium et que le chlorure de calcium est sous forme de paillettes et sous forme de perles, dans un rapport entre la quantité en poids de chlorure de calcium sous forme de perles et la quantité en poids de chlorure de calcium sous forme de paillettes compris entre 0,5 et 1,5.

2. Composition selon la revendication 1, **caractérisée en ce que** le mélange de sels de calcium comprend en poids environ 80% de chlorure de calcium et environ 20% de carbonate de calcium.

3. Composition selon l'une quelconque des revendications 1 et 2, **caractérisée en ce que** le rapport entre la quantité en poids de chlorure de calcium sous forme de perles et la quantité en poids de chlorure de calcium sous forme de paillettes est supérieure à 1.

4. Composition selon l'une quelconque des revendications précédentes, **caractérisée en ce que** le carbonate de calcium est sous forme de grains d'au moins deux profils granulométriques différents.

5. Composition selon l'une quelconque des revendication précédentes, **caractérisée en ce qu'**elle comprend en outre un indicateur d'épandage coloré, de préférence adsorbé sur une partie au moins du chlorure de calcium.

6. Composition selon la revendication 5, **caractérisée en ce que** la quantité d'indicateur d'épandage coloré représente en poids 0,01% du poids total.

7. Composition selon la revendication 5 ou 6, **caractérisée en ce que** l'indicateur d'épandage coloré est un colorant alimentaire pouvant être choisi dans le groupe des colorants Exxx, et est de préférence E102, E104, E110, E131.

8. Composition selon l'une quelconque des revendications précédentes, **caractérisée en ce qu'**elle comprend en outre un agent anti-figeant.

9. Composition selon la revendication 8, **caractérisée en ce que** l'agent anti-figeant peut être choisi parmi les composés et les sels organiques et minéraux, et est avantageusement le chlorure de sodium ou l'urée.

10. Composition selon la revendication 9, **caractérisée en ce que** la quantité d'urée représente en poids 4% du poids total.

11. Utilisation d'une composition selon l'une quelconque des revendications précédentes sur une surface pour provoquer la fusion de la neige, de la glace ou de toute autre forme d'eau solide présente sur ladite surface.

12. Procédé de préparation d'une composition selon l'une quelconque des revendications 5 à 10, **caractérisé en ce qu'**il comprend les étapes successives suivantes :
- introduire dans un mélangeur à pales, à vis, ou tout autre mélangeur équivalent, une fraction de la quantité totale de chlorure de calcium et l'indicateur d'épandage;
- mélanger lentement jusqu'à répartir uniformément l'indicateur d'épandage sur le chlorure de calcium sans casser les paillettes de chlorure de calcium;
- ajouter la fraction restante de chlorure de calcium ainsi que le carbonate de calcium et éventuellement les autres ingrédients.
- mélanger jusqu'à obtenir un mélange solide uniforme.

## Claims

1. Snow-removing, de-icing and antiskid powder composition, **characterized in that** it comprises a mixture of calcium salts containing 70 to 90 weight % calcium chloride and 10 to 30 weight % calcium carbonate, and **in that** the calcium chloride is in flake form and bead form, in a ratio between quantity by weight of calcium chloride in bead form and quantity by weight of calcium chloride in flake form of between 0.5 and 1.5.

2. Composition according to claim 1, **characterized in that** the mixture of calcium salts comprises about 80 weight % calcium chloride and about 20 weight % calcium carbonate.

3. Composition according to either of claims 1 and 2, **characterized in that** the ratio between the quantity by weight of calcium chloride in bead form and the quantity by weight of calcium chloride in flake form is greater than 1.

4. Composition according to any of the preceding claims, **characterized in that** the calcium carbonate is in granular form with at least two different particle profiles.

5. Composition according to any of the preceding claims, **characterized in that** it further comprises a coloured spread indicator preferably adsorbed on at least one part of the calcium chloride.

6. Composition according to claim 5, **characterized in that** the quantity of coloured spread indicator represents 0.01 weight % of the total weight.

7. Composition according to claim 5 or 6, **characterized in that** the coloured spread indicator is a food colouring which may be chosen from the group of Exxx colourings, and is preferably E102, E104, E110, E131.

8. Composition according to any of the preceding claims, **characterized in that** it further comprises an anti-congealing agent.

9. Composition according to claim 8, **characterized in that** the anti-congealing agent may be chosen from among organic and mineral compounds and salts, and is advantageously sodium chloride or urea.

10. Composition according to claim 9, **characterized in that** the quantity of urea represents 4% by weight of the total weight.

11. Use of a composition according to any of the preceding claims on a surface in order to cause melting of snow, ice or any other form of solid water present on said surface.

12. Method to prepare a composition according to any of claims 5 to 10, **characterized in that** it comprises the following successive steps:
- adding to a blade or screw mixer or any other equivalent mixer, a fraction of the total quantity of calcium chloride and spread indicator;
- blending slowly until the spread indicator is uniformly distributed on the calcium chloride without breaking the flakes of calcium chloride;
- adding the remaining fraction of calcium chloride and calcium carbonate, and optionally the other ingredients.
- mixing until a uniform, solid mixture is obtained.

## Patentansprüche

1. Feinpulverige schnee- und glatteisbeseitigende rutschhemmende Zusammensetzung, **dadurch gekennzeichnet, dass** sie ein Gemisch aus Kalziumsalzen umfasst, das 70 bis 90 Gew.-% Kalziumchlorid und 10 bis 30 Gew.-% Kalziumkarbonat umfasst und dass das Kalziumchlorid in Form von Pailletten und in Form von Perlen ist in einem Verhältnis der Gewichtsmenge Kalziumchlorid in Form von Perlen zur Gewichtsmenge Kalziumchlorid in Form von Pailletten zwischen 0,5 und 1,5 inklusive.

2. Zusammensetzung nach Anspruch 1, **dadurch gekennzeichnet, dass** das Gemisch aus Kalziumsalzen zirka 80 Gew.-% Kalziumchlorid und zirka 20 Gew.-% Kalziumkarbonat umfasst.

3. Zusammensetzung nach einem der Ansprüche 1 und 2, **dadurch gekennzeichnet, dass** der Verhältnis der Gewichtsmenge Kalziumchlorid in Form von Perlen zur Gewichtsmenge Kalziumchlorid in Form von Pailletten größer als 1 ist.

4. Zusammensetzung nach einem der vorangehenden Ansprüche, **dadurch gekennzeichnet, dass** das Kalziumkarbonat in Form von Körnern mindestens zwei unterschiedlicher Korngrößenprofile ist.

5. Zusammensetzung nach einem der vorangehenden Ansprüche, **dadurch gekennzeichnet, dass** sie weiterhin einen vorzugsweise mindestens teilweise vom Kalziumchlorid adsorbierten farbigen Verteilungsindikator umfasst.

6. Zusammensetzung nach Anspruch 5, **dadurch gekennzeichnet, dass** die Menge des farbigen Verteilungsindikators gewichtsmäßig 0,01 % des Gesamtgewichts darstellt.

7. Zusammensetzung nach Anspruch 5 oder 6, **dadurch gekennzeichnet, dass** der farbige Verteilungsindikator eine Lebensmittelfarbe ist, die aus der Gruppe der Exxx Farbstoffe auswählbar ist und vorzugsweise E102, E104, E110, E131 ist.

8. Zusammensetzung nach einem der vorangehenden Ansprüche, **dadurch gekennzeichnet, dass** sie weiterhin ein Gefrierschutzmittel umfasst.

9. Zusammensetzung nach Anspruch 8, **dadurch gekennzeichnet, dass** das Gefrierschutzmittel aus den organischen und mineralischen Verbindungen und Salzen auswählbar ist und in vorteilhafter Weise Natriumchlorid oder Harnstoff ist.

10. Zusammensetzung nach Anspruch 9, **dadurch gekennzeichnet, dass** die Harnstoffmenge in Gewicht 4 % des Gesamtgewichts darstellt.

11. Verwendung einer Zusammensetzung nach einem der vorangehenden Ansprüche auf einer Fläche, um das Schmelzen des Schnees, des Eises beziehungsweise aller anderen Formen festen Wassers zu veranlassen, die auf der Fläche vorhanden sind.

12. Verfahren zur Herstellung einer Zusammensetzung nach einem der Ansprüche 5 bis 10, **dadurch gekennzeichnet, dass** es die folgenden aufeinander folgenden Schritte umfasst:
- Einbringen in einen Klingen-, Schnecken- oder jeden anderen äquivalenten Mischer eines Teils der Gesamtmenge des Kalziumchlorids und des Verteilungsindikators,
- langsames Mischen, bis der Verteilungsindikator gleichmäßig in dem Kalziumchlorid verteilt ist, ohne die Kalziumchloridpailletten zu beschädigen,
- Hinzufügen des restlichen Teils des Kalziumchlorids sowie des Kalziumkarbonats und eventuell der anderen Inhaltsstoffe,
- Mischen, bis ein festes gleichmäßiges Gemisch entsteht.
